# EUROPÄISCHE PATENTSCHRIFT

(11) **EP 3 115 332 B1**
(45) Veröffentlichungstag und Bekanntmachung des Hinweises auf die Patenterteilung: **12.09.2018**
(21) Anmeldenummer: 16177588.7
(22) Anmeldetag: 01.07.2016
(51) Int. Cl.: B66F 9/075, B66F 17/00, B62D 6/00, B62D 6/02, B62D 5/04

(54) **VERFAHREN ZUR STEUERUNG EINES FLURFÖRDERZEUGS**
METHOD FOR CONTROLLING AN INDUSTRIAL TRUCK
PROCEDE DE COMMANDE D'UN CHARIOT DE MANUTENTION

(30) Priorität: 08.07.2015 DE 102015111028; 18.09.2015 DE 102015115825
(43) Veröffentlichungstag der Anmeldung: 11.01.2017
(73) Patentinhaber: OM Carrelli Elevatori S.p.A., 20020 Lainate (MI) (IT)
(72) Erfinder: Iori, Michele, 42047 Rolo - Reggio Emilia (IT)
(74) Vertreter: Patentship Patentanwaltsgesellschaft mbH

(56) Entgegenhaltungen:
- EP-A1- 1 914 140
- EP-A1- 2 674 387
- EP-A2- 1 418 114
- DE-A1- 10 163 330
- DE-A1-102011 013 248
- US-A- 5 181 173

## Beschreibung

Die Erfindung betrifft ein Verfahren zur Steuerung eines Flurförderzeugs. Insbesondere betrifft die Erfindung ein Verfahren zur Steuerung eines Flurförderzeugs mit einer Steuerungsvorrichtung, die eine Regelung der Fahrgeschwindigkeit des Flurförderzeugs durchführt basierend auf einem Fahrgeschwindigkeitssollsignal eines Fahrsignalgebers und mit einer elektrischen Lenkung, bei der die Steuerungsvorrichtung basierend auf einem Lenksollsignal einer Lenkbedienvorrichtung den Lenkeinschlagwinkel mindestens eines gelenkten Rades durch einen Stellantrieb einstellt, wobei ein Lenkeinschlagistwert erfasst wird, und wobei durch die Steuerungsvorrichtung abhängig von dem Lenkeinschlagwinkel die maximale Fahrgeschwindigkeit begrenzt wird, insbesondere das Fahrgeschwindigkeitssollsignal begrenzt wird.

Zu den verschiedenen Arten von Flurförderzeugen gehören beispielsweise Lagertechnikgeräte in Form von Gabelhubwagen. Elektrisch angetriebene Gabelhubwagen weisen dabei einen Antriebsteil mit einem einzelnen Antriebsrad auf, das zugleich zum Lenken dient. Neben den Stützrollen unter den Lastarmen werden noch eine weitere oder zwei weitere Stützrollen eingesetzt, sodass sich ein Vierpunkt- oder Fünfpunktfahrwerk ergibt.

Bei diesen Lagertechnikgeräten entsteht das Problem, dass bei zu hohen Geschwindigkeiten bei Kurvenfahrt es aufgrund der Fliehkräfte zu Instabilitäten kommen kann.

Weiterhin zählen zu den Flurförderzeugen Gegengewichtsgabelstapler, die an einer Vorderachse angeordnet einen Hubmast aufweisen mit einem Lastaufnahmemittel, das an dem Hubmast höhenbeweglich geführt ist, beispielsweise einer Lastgabel. Über einer Hinterachse befindet sich dabei ein Gegengewicht zum Ausgleich für eine sich vor der Vorderachse auf dem Lastaufnahmemittel befindlichen Last. An der Hinterachse weisen diese Gegengewichtsgabelstapler häufig eine Pendelachse oder ein angetriebenes Einzelrad auf, das zugleich zur Lenkung dient. Dadurch kommt es zu einem Dreieck der Aufstandspunkte des Gabelstaplers innerhalb dessen bzw. über dem sich der Schwerpunkt des gesamten Fahrzeugs befinden muss. Vor allem bei einem nicht beladenen Gegengewichtsgabelstapler verschiebt sich jedoch der Schwerpunkt nach hinten in die "Spitze" des Dreiecks und es kann bei höherer Fahrgeschwindigkeit aufgrund der Fliehkräfte bei Kurvenfahrt zu Instabilitäten kommen.

Bei Flurförderzeugen ganz allgemein, bei Gegengewichtsgabelstaplern und bei Lagertechnikgeräten sind elektrische Lenkung bekannt. Bei diesen besteht keine mechanische Verbindung zwischen einer Lenkbedienvorrichtung, insbesondere beispielsweise einem Lenkrad oder einer Lenkdeichsel, und einem oder mehreren gelenkten Rädern. Vielmehr wird über ein Lenksollsignal ein Stellantrieb für das oder die gelenkten Räder angesteuert, der zumeist über einen Elektromotor den Lenkeinschlag einstellt. Hierfür wird ein Regelkreis eingesetzt, durch den auch das Lenkeinschlagistsignal erfasst wird entsprechend dem tatsächlichen Lenkeinschlag der gelenkten Räder.

Es ist bekannt, den maximal zulässigen Lenkeinschlag bzw. ein zulässiges Lenksollsignal für den Lenkeinschlag von einer Fahrgeschwindigkeit abhängig zu machen.

Nachteilig an diesem Stand der Technik ist jedoch, dass Lenksollsignal und Lenkeinschlagistsignal zum Teil erheblich abweichen können. Wenn jedoch die Fahrgeschwindigkeit oder ein möglicher Lenkeinschlag unnötig stark beschränkt wird, wird dies als unangenehm durch die Bedienpersonen empfunden und wird nur eine schlechtere Warenumschlagsleistung erreicht, da es zu zeitlichen Verzögerungen bei den Arbeitsabläufen kommt.

Aus der DE 2011 013 248 A1 ist ein Flurförderzeug mit einem gattungsgemäßen Verfahren bekannt, bei dem die Begrenzung der Fahrgeschwindigkeit durch das Lenksollsignal erfolgt, das auf den Fahrregler gegeben wird.

Aus der DE 26 51 594 A ist ein Gabelstapler bekannt, bei dem mit zunehmendem Lenkeinschlag abhängig von dem Sollsignalwert eines Lenkrads die maximale Fahrgeschwindigkeit begrenzt wird.

Aus der DE 101 63 330 A1 ist ein Gabelstapler bekannt, bei dem eine Beeinflussung der Solllenkgeschwindigkeit bzw. des Sollenkwinkels in Abhängigkeit von der Fahrzeuggeschwindigkeit erfolgt.

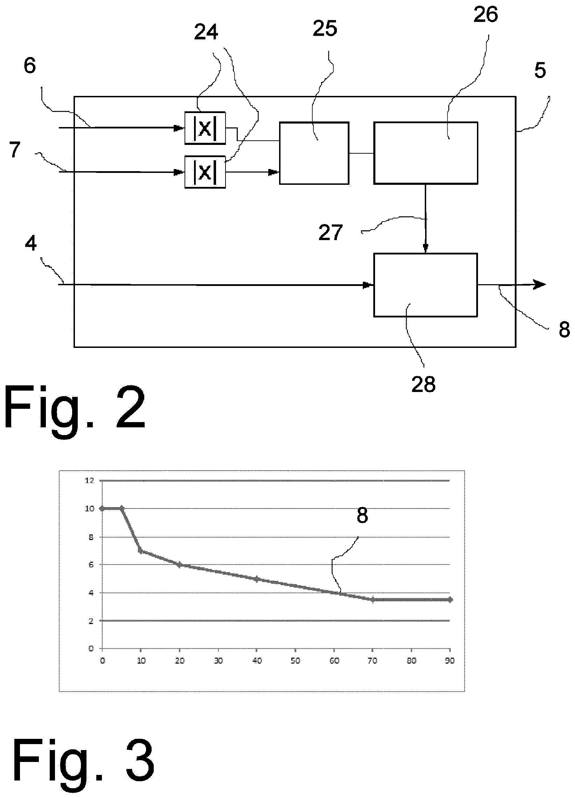

Die EP 2 674 387 A1 offenbart ein Flurförderzeug, bei dem die Begrenzung der Fahrgeschwindigkeit gemäß einem ersten Ausführungsbeispiel in Abhängigkeit von dem Lenkwinkelsollwert (Figur 2) erfolgt, oder gemäß einem zweiten, alternativen Ausführungsbeispiel in Abhängigkeit von dem Lenkwinkelistwert (Figur 3) erfolgt.

Die EP 1 418 114 A2 ist ein Flurförderzeug bekannt, bei dem die maximale Fahrgeschwindigkeit in Abhängigkeit von dem momentanen Lenkwinkel (Lenkwinkelistwert) eines gelenkten Rades des Flurförderzeugs angepasst wird.

Der vorliegenden Erfindung liegt die Aufgabe zugrunde, die aus Sicherheitsgründen notwendige Beschränkungen der Fahrgeschwindigkeit und/oder des Lenkeinschlagwinkels zu optimieren.

Diese Aufgabe wird durch ein Verfahren zur Steuerung eines Flurförderzeugs mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Verfahren zur Steuerung eines Flurförderzeugs mit einer Steuerungsvorrichtung, die eine Regelung der Fahrgeschwindigkeit des Flurförderzeugs durchführt basierend auf einem Fahrgeschwindigkeitssollsignal eines Fahrsignalgebers und mit einer elektrischen Lenkung, bei der die Steuerungsvorrichtung basierend auf einem Lenksollsignal einer Lenkbedienvorrichtung den Lenkeinschlagwinkel mindestens eines gelenkten Rades durch einen Stellantrieb einstellt, wobei ein Lenkeinschlagistwert erfasst wird, und wobei durch die Steuerungsvorrichtung abhängig von dem Lenkeinschlagwinkel die maximale Fahrgeschwindigkeit begrenzt wird, insbesondere das Fahrgeschwindigkeitssollsignal begrenzt wird, die Steuerungsvorrichtung den Maximalwert von Lenksollsignal und Lenkeinschlagistwert bestimmt und die Begrenzung der Fahrgeschwindigkeit abhängig von dem Maximalwert erfolgt.

Bei dem erfindungsgemäßen Verfahren wird die maximale Fahrgeschwindigkeit abhängig von dem Lenkeinschlagwinkel begrenzt, wobei für diesen Zweck als Lenkeinschlagwinkel der betragsmäßige Maximalwert von Lenksollsignal oder Lenkeinschlagistwert genommen wird. Bei einer elektrischen Lenkung kann es aufgrund von Schleppfehlern, Verzögerungen in der Nachregelung, einer schnellen Gegenlenkbewegung oder ähnlichem dazu kommen, dass das Lenksollsignal und der Lenkeinschlagistwert in einem nennenswerten Maß voneinander abweichen. In besonderem Maße gilt dies beispielsweise für Niederhubwagen als Flurförderzeug, die über eine Deichsel gelenkt werden, die wiederum eine Lenkbedienvorrichtung für eine elektrische Lenkung bildet. Eine Deichsel kann sehr viel schneller als ein Lenkrad auf einen maximalen Einschlag bewegt werden und somit ein sehr großes Lenksollsignal erzeugen, während der Lenkeinschlagistwert noch einen sehr viel kleineren Wert aufweist. Wenn dann der betragsmäßig größere der beiden für die Begrenzung der maximalen Fahrgeschwindigkeit gewählt wird, kann ein sicherer Betriebszustand gewährleistet werden und können mögliche sichere Grenzwerte für den Betrieb des Flurförderzeugs genauer und enger ausgenutzt werden.

Vorteilhaft wird die Fahrgeschwindigkeit entsprechend einer Kennlinie begrenzt.

Wenn die maximale Fahrgeschwindigkeit zu dem Lenkeinschlagwinkel bzw. dem betragsmäßigen Maximalwert von Lenksollsignal oder Lenkeinschlagistwert in einer Kennlinie und nicht einfach linear verknüpft ist, kann eine genauere Anpassung erfolgen. Beispielsweise kann zunächst eine überproportional starke Absenkung der maximal zulässigen Fahrgeschwindigkeit erfolgen, während bei sehr großen Lenkeinschlagwinkeln die Abnahme nur noch relativ gering ist oder schließlich eine konstante maximale Fahrgeschwindigkeit auf niedrigem Niveau zulässig ist.

Es kann eine Begrenzung der Fahrgeschwindigkeit erst oberhalb eines Schwellenwertes des Maximalwerts von Lenksollsignal und Lenkeinschlagistwert erfolgen.

Bei sehr kleinen Lenkeinschlagwinkeln entstehen nur sehr geringe Fliehkräfte und wird die Stabilität des Fahrzeuges kaum beeinflusst. Wenn sofort eine Verringerung der maximalen Fahrgeschwindigkeit erfolgen würde, so hätte dies unangenehme Auswirkungen auf das Betriebsverhalten des Flurförderzeugs, da bereits kleine, unabsichtliche Bewegungen der Lenkbedienvorrichtung sich bei maximaler Fahrgeschwindigkeit auswirken würden. Indem eine Begrenzung der Fahrgeschwindigkeit erst oberhalb eines Schwellenwertes des Maximalwerts von Lenksollsignal und Lenkeinschlagistwert erfolgt, wird dies verhindert.

Vorteilhaft begrenzt die Steuerungsvorrichtung das Lenksollsignal abhängig von Fahrgeschwindigkeitssollsignal und/oder einem Fahrgeschwindigkeitsistsignal.

Dadurch wird verhindert, dass bei einer Fahrt ein für diese Fahrgeschwindigkeit zu großer Lenkeinschlagwinkel erreicht werden kann. Es kann auch vorgesehen sein, dass im Falle einer Vorgabe der Lenkbedienvorrichtung für einen Lenksollwinkel und zu großer Fahrgeschwindigkeit eine Abbremsung des Fahrzeuges erfolgt und jeweils nur mit der absinkenden Fahrgeschwindigkeit der jeweils zulässigen Lenksollwinkel zugelassen wird.

Die Steuerungsvorrichtung kann das Lenksollsignal abhängig von einem Maximalwert aus Fahrgeschwindigkeitssollsignal und Fahrgeschwindigkeitsistsignal begrenzen.

Auch in Bezug auf das Lenksollsignal kann eine Optimierung erfolgen, indem der betragsmäßige maximale Wert aus dem Fahrgeschwindigkeitssollsignal und dem Fahrgeschwindigkeitsistsignal genutzt wird.

Die Steuerungsvorrichtung kann eine Lenksollgeschwindigkeit abhängig von einem Fahrgeschwindigkeitsistsignal begrenzen.

Neben dem Lenksollsignal oder unabhängig von diesem kann auch die Stellgeschwindigkeit der Lenkung, die Solllenkgeschwindigkeit begrenzt werden. Dies kann abhängig von einem Fahrgeschwindigkeitsistsignal erfolgen. Alternativ hierzu oder daneben kann dies auch abhängig von einem Fahrgeschwindigkeitssollsignal erfolgen. Auch hier ist es denkbar, den dem Betrage nach maximalen Wert von Fahrgeschwindigkeitsistsignal und Fahrgeschwindigkeitssollsignal zu nutzen.

Die Lenkbedienvorrichtung weist vorteilhaft eine Kennlinie für das Lenksollsignal auf, bei der bei kleinem Betätigungsweg zunächst ein überproportional geringer Anstieg des Lenksollsignals erfolgt.

Dadurch wird der Anstieg des Lenksollsignals im Bereich kleiner Lenkeinschläge relativ verlangsamt.

In einer vorteilhaften Ausführung des Verfahrens ist das Flurförderzeug ein Lagertechnikgerät und die Lenkbedienvorrichtung eine Lenkdeichsel.

Wie bereits zuvor ausgeführt ist das Verfahren besonders vorteilhaft bei durch eine Lenkdeichsel gelenkten Flurförderzeugen, da bei diesen sehr schnelle Änderungen des Lenksollsignals möglich sind gegenüber beispielsweise einem Lenkrad als Lenkbedienvorrichtung, das mehrere Umdrehungen erfordert.

Das Flurförderzeug kann ein Schubmaststapler oder Gegengewichtsgabelstapler sein und die Lenkbedienvorrichtung ein Lenkrad.

Der Fahrsignalgeber kann ein Fahrschalter oder Fahrpedal sein.

Weitere Vorteile und Einzelheiten der Erfindung werden anhand des in den schematischen Figuren dargestellten Ausführungsbeispiels näher erläutert. Hierbei zeigt
- Fig. 1: schematisch in einem Diagramm das erfindungsgemäße Verfahren zur Steuerung eines Flurförderzeugs,
- Fig. 2: einen Ausschnitt aus dem Diagramm der Fig. 1,
- Fig. 3: eine Kennlinie des Verhältnisses der maximalen Fahrgeschwindigkeit im Vergleich zum Lenkwinkel,
- Fig. 4: eine Kennlinie des Verhältnisses der Betätigung der Lenkbedienvorrichtung zu einem Lenksollsignal und
- Fig. 5: eine Kennlinie des Verhältnisses des Lenkwinkels zu der Fahrgeschwindigkeit.

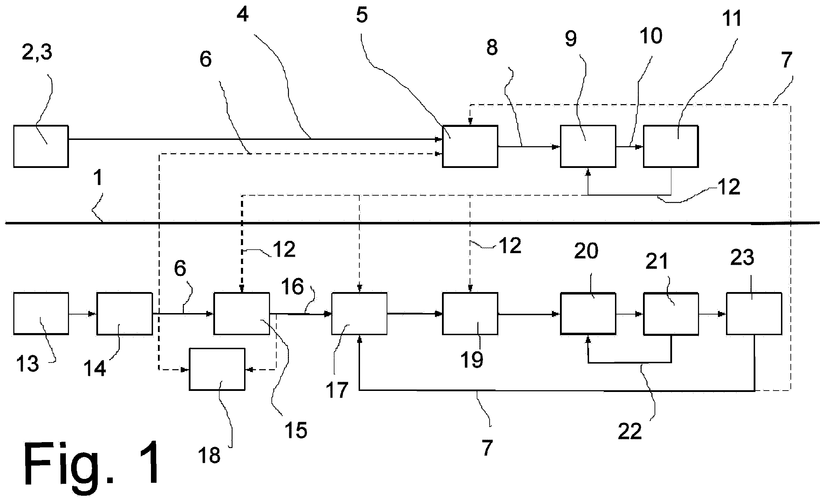

Die Fig. 1 zeigt schematisch in einem Diagramm das erfindungsgemäße Verfahren zur Steuerung eines Flurförderzeugs. Dabei ist oberhalb einer Trennlinie 1 eine Steuerung der Fahrgeschwindigkeit dargestellt und unterhalb der Trennlinie 1 eine Steuerung der elektrischen Lenkung. Ein Fahrsignalgeber 2, beispielsweise in Form eines Fahrschalters 3 eines Niederhubwagens als Beispiel für ein Flurförderzeug, erzeugt ein Fahrgeschwindigkeitssollsignal 4, das in einer maximalen Fahrgeschwindigkeitsbegrenzungseinheit 5 abhängig von einem Lenksollsignal 6 und einem Lenkeinschlagistwert 7 in seinem Maximalwert begrenzt wird. Ein limitiertes Fahrgeschwindigkeitssollsignal 8 wird einer Fahrgeschwindigkeitsregelung 9 zugeführt, die über ein Stellsignal 10 den Fahrmotor 11 antreibt und ein Fahrgeschwindigkeitsistsignal 12 erhält.

Unterhalb der Trennlinie 1 ist die Steuerung für die elektrische Lenkung dargestellt. Eine Lenkbedienvorrichtung 13 erzeugt entsprechend einer Kennlinie 14 das Lenksollsignal 6. In einer Begrenzungseinheit 15 für das Lenksollsignal 6, die das Fahrgeschwindigkeitsistsignal 12 erhält, wird ein limitiertes Lenksollsignal 16 erzeugt, das an eine Positionsregelung 17 weitergeleitet wird, die den Lenkeinschlagistwert 7 als Sollwert erhält. Zu der Begrenzungseinheit 15 besteht parallel ein Beobachter 18 für die Begrenzungseinheit 15 für das Lenksollsignal 6. Die Positionsregelung erzeugt einen Lenkgeschwindigkeitssollwert, der an eine Lenkgeschwindigkeitsbegrenzungseinheit 19 weitergeleitet wird, der auch das Fahrgeschwindigkeitsistsignal 12 zugeleitet wird. Eine Lenkgeschwindigkeitsregelung 20 steuert einen Lenkmotor 21 an und erhält eine Lenkistgeschwindigkeit 22 als Rückkopplung. Dabei wird in dem vorliegenden Beispiel der Lenkeinschlagistwert 7 durch einen mit dem Lenkmotor 21 verbundenen Positionspotentiometer 23 erzeugt.

Die Fig. 2 zeigt einen Ausschnitt aus dem Diagramm der Fig. 1. Dargestellt ist die Fahrgeschwindigkeitsbegrenzungseinheit 5, die das Lenksollsignal 6 und den Lenkeinschlagistwert 7 sowie das Fahrgeschwindigkeitssollsignal 4 erhält. Von dem Lenksollsignal 6 und dem Lenkeinschlagistwert 7 wird jeweils ein Absolutwert 24 gebildet und von diesen der Maximalwert in einer Maximalwertbestimmungseinheit 25 gebildet. Mithilfe des Maximalwerts wird in einer Berechnungseinheit 26 eine maximal zulässige Fahrgeschwindigkeit 27 berechnet oder aus einem Kennfeld bestimmt. Wenn das Fahrgeschwindigkeitssollsignal 4 größer ist als die maximal zulässige Fahrgeschwindigkeit 27 wird in einer Begrenzungseinheit 28 das Fahrgeschwindigkeitssollsignal 4 auf ein limitiertes Fahrgeschwindigkeitsollsignal 8 begrenzt.

Die Fig. 3 zeigt eine Kennlinie des Verhältnisses der maximalen Fahrgeschwindigkeit im Vergleich zum Lenkeinschlagwinkel, entsprechend dem Maximalwert von Lenksollsignal 6 und dem Lenkeinschlagistwert 7 in Winkelgrad. Die hier in der Hochachse dargestellte maximale Fahrgeschwindigkeit entspricht dem limitierten Fahrgeschwindigkeitssollsignal 8 und ist in km/h angegeben. Die maximale Fahrgeschwindigkeit wird erst beim Überschreiten eines Schwellenwertes von ungefähr 5° bis 6° limitiert, wobei zunächst in der Kennlinie eine sehr starke Beschränkung mit zunehmendem Winkel erfolgt und die Kennlinie bei großen Winkeln stark abflacht.

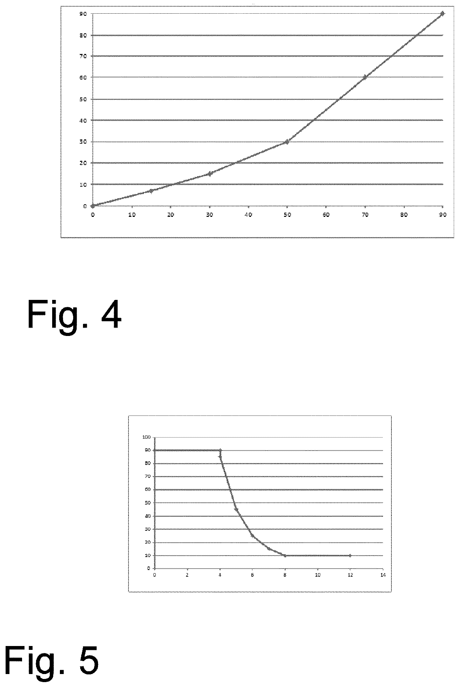

Die Fig. 4 zeigt eine Kennlinie des Verhältnisses der Betätigung der Lenkbedienvorrichtung 13 in Winkelgrad auf der Rechtsachse zu dem sich ergebenden Lenksollsignal 6 in Winkelgrad auf der Hochachse. Nahe dem Bereich der Geradeausfahrt, in dem auch im Normalfall die maximale Fahrgeschwindigkeit ausgenutzt wird, kommt es somit zu relativ gesehen einem kleinen Lenksollsignal im Verhältnis zur Winkelbetätigung beispielsweise einer Lenkdeichsel. Dadurch wird die Gefahr einer unbeabsichtigt großen Fliehkraftwirkung ebenfalls vermindert und eine feinfühligere Betätigung um die Mittellage der Lenkung ermöglicht.

Die Fig. 5 zeigt eine Kennlinie des Verhältnisses des maximalen Lenkwinkels bzw. Lenksollsignals 6 auf der Hochachse zu dem Fahrgeschwindigkeitsistsignal 12. Der maximal mögliche Lenkeinschlag wird abhängig von dem Fahrgeschwindigkeitsistsignal 12 ab dem Überschreiten eines Schwellenwertes zunächst stark abfallend begrenzt.

## Patentansprüche

1. Verfahren zur Steuerung eines Flurförderzeugs mit einer Steuerungsvorrichtung, die eine Regelung der Fahrgeschwindigkeit des Flurförderzeugs durchführt basierend auf einem Fahrgeschwindigkeitssollsignal (4) eines Fahrsignalgebers (2) und mit einer elektrischen Lenkung, bei der die Steuerungsvorrichtung basierend auf einem Lenksollsignal (6) einer Lenkbedienvorrichtung (13) den Lenkeinschlagwinkel mindestens eines gelenkten Rades durch einen Stellantrieb einstellt, wobei ein Lenkeinschlagistwert (7) erfasst wird, und wobei durch die Steuerungsvorrichtung abhängig von dem Lenkeinschlagwinkel die maximale Fahrgeschwindigkeit begrenzt wird, insbesondere das Fahrgeschwindigkeitssollsignal (4) begrenzt wird,
**dadurch gekennzeichnet,**
**dass** die Steuerungsvorrichtung den Maximalwert von Lenksollsignal (6) und Lenkeinschlagistwert (7) bestimmt und die Begrenzung der Fahrgeschwindigkeit abhängig von dem Maximalwert erfolgt.

2. Verfahren nach Anspruch 1,
**dadurch gekennzeichnet,**
**dass** die Fahrgeschwindigkeit entsprechend einer Kennlinie begrenzt wird.

3. Verfahren nach Anspruch 1 oder 2,
**dadurch gekennzeichnet,**
**dass** eine Begrenzung der Fahrgeschwindigkeit erst oberhalb eines Schwellenwertes des Maximalwerts von Lenksollsignal (6) und Lenkeinschlagistwert (7) erfolgt.

4. Verfahren nach einem der Ansprüche 1 bis 3,
**dadurch gekennzeichnet,**
**dass** die Steuerungsvorrichtung das Lenksollsignal (6) abhängig von Fahrgeschwindigkeitssollsignal (4) und/oder einem Fahrgeschwindigkeitsistsignal (12) begrenzt.

5. Verfahren nach Anspruch 4,
**dadurch gekennzeichnet,**
**dass** die Steuerungsvorrichtung das Lenksollsignal (6) abhängig von einem Maximalwert aus Fahrgeschwindigkeitssollsignal (4) und Fahrgeschwindigkeitsistsignal (12) begrenzt.

6. Verfahren nach einem der Ansprüche 1 bis 5,
**dadurch gekennzeichnet,**
**dass** die Steuerungsvorrichtung eine Lenksollgeschwindigkeit abhängig von einem Fahrgeschwindigkeitsistsignal (12) begrenzt

7. Verfahren nach einem der Ansprüche 1 bis 6,
**dadurch gekennzeichnet,**
**dass** die Lenkbedienvorrichtung eine Kennlinie für das Lenksollsignal (6) aufweist, bei der bei kleinem Betätigungsweg zunächst ein überproportional geringer Anstieg des Lenksollsignals (6) erfolgt.

8. Verfahren nach einem der Ansprüche 1 bis 7,
**dadurch gekennzeichnet,**
**dass** das Flurförderzeug ein Lagertechnikgerät ist und die Lenkbedienvorrichtung (13) eine Lenkdeichsel.

9. Verfahren nach einem der Ansprüche 1 bis 7,
**dadurch gekennzeichnet,**
**dass** das Flurförderzeug ein Schubmaststapler oder Gegengewichtsgabelstapler ist und die Lenkbedienvorrichtung (13) ein Lenkrad.

10. Verfahren nach einem der Ansprüche 1 bis 9,
**dadurch gekennzeichnet,**
**dass** der Fahrsignalgeber (2) ein Fahrschalter (3) oder ein Fahrpedal ist.

## Claims

1. Method for controlling an industrial truck having a control device which regulates the velocity of the industrial truck on the basis of a velocity setpoint signal (4) of a drive signal generator (2) and having an electric steering system, in which the control device sets the steering lock angle of at least one steered wheel by means of an actuator drive on the basis of a steering setpoint signal (6) of a steering operator control device (13), wherein a steering lock actual value (7) is sensed, and wherein the maximum velocity is limited, in particular the velocity setpoint signal (4) is limited, via the control device as a function of the steering lock angle,
**characterised**
**in that** the control device determines the maximum value of the steering setpoint signal (6) and the steering lock actual value (7) and the limitation of the velocity takes place as a function of the maximum value.

2. Method according to Claim 1,
**characterised**
**in that** the velocity is limited in accordance with a characteristic curve.

3. Method according to Claim 1 or 2,
**characterised**
**in that** the velocity is first limited above a threshold value of the maximum value of the steering setpoint signal (6) and the steering lock actual value (7).

4. Method according to one of Claims 1 to 3,
**characterised**
**in that** the control device limits the steering setpoint signal (6) as a function of the velocity setpoint signal (4) and/or a velocity actual signal (12).

5. Method according to Claim 4,
**characterised**
**in that** the control device limits the steering setpoint signal (6) as a function of a maximum value from velocity setpoint signal (4) and velocity actual signal (12).

6. Method according to one of Claims 1 to 5,
**characterised**
**in that** the control device limits a steering setpoint speed as a function of a velocity actual signal (12).

7. Method according to one of Claims 1 to 6,
**characterised**
**in that** the steering operator control device has a characteristic curve for the steering setpoint signal (6) in which initially a disproportionately small rise in the steering setpoint signal (6) takes place when there is a small amount of activation travel.

8. Method according to one of Claims 1 to 7,
**characterised**
**in that** the industrial truck is a piece of warehouse equipment, and the steering operator control device (13) is a steering drawbar.

9. Method according to one of Claims 1 to 7,
**characterised**
**in that** the industrial truck is a reach truck or counterbalance fork-lift truck, and the steering operator control device (13) is a steering wheel.

10. Method according to one of Claims 1 to 9,
**characterised**
**in that** the drive signal generator (2) is a traction switch (3) or an accelerator pedal.

## Revendications

1. Procédé de commande d'un chariot de manutention comportant un dispositif de commande qui effectue une régulation de la vitesse de déplacement du chariot de manutention sur la base d'un signal de vitesse de déplacement de consigne (4) d'un générateur de signal de déplacement (2) et comportant une direction électrique, dans lequel le dispositif de commande règle l'angle de braquage d'au moins une roue directrice au moyen d'un actionneur sur la base d'un signal de direction de consigne (6) d'un dispositif de commande de direction (13), dans lequel une valeur d'angle de braquage réelle (7) est détectée, et dans lequel la vitesse de déplacement maximale est limitée par le dispositif de commande en fonction de l'angle de braquage, en particulier le signal de vitesse de déplacement de consigne (4) est limité,
**caractérisé en ce que** le dispositif de commande détermine la valeur maximale du signal de braquage de consigne (6) et la valeur d'angle de braquage réelle (7) et la limitation de la vitesse de déplacement en fonction de la valeur maximale est effectuée.

2. Procédé selon la revendication 1,
**caractérisé en ce que** la vitesse de déplacement est limitée selon une courbe caractéristique.

3. Procédé selon la revendication 1 ou 2,
**caractérisé en ce que** la limitation de la vitesse de déplacement n'est effectuée qu'au-dessus d'une valeur de seuil de la valeur maximale du signal de direction de consigne (6) et de la valeur d'angle de braquage réelle (7) .

4. Procédé selon l'une des revendications 1 à 3,
**caractérisé en ce que** le dispositif de commande limite le signal de direction de consigne (6) en fonction du signal de vitesse de déplacement de consigne (4) et/ou d'un signal de vitesse de déplacement réel (12).

5. Procédé selon la revendication 4,
**caractérisé en ce que** le dispositif de commande limite le signal de direction de consigne (6) en fonction d'une valeur maximale du signal de vitesse de déplacement de consigne (4) et du signal de vitesse de déplacement réel (12) .

6. Procédé selon l'une des revendications 1 à 5,
**caractérisé en ce que** le dispositif de commande limite une vitesse de direction de consigne en fonction d'un signal de vitesse de déplacement réel (12).

7. Procédé selon l'une des revendications 1 à 6,
**caractérisé en ce que** le dispositif de commande de direction présente une courbe caractéristique pour le signal de direction de consigne (6) conformément à laquelle une faible augmentation supérieure à la proportionnalité du signal de direction de consigne (6) est effectuée initialement pour une faible course d'actionnement.

8. Procédé selon l'une des revendications 1 à 7,
**caractérisé en ce que** le chariot de manutention est un système technique de stockage et **en ce que** le dispositif de commande de direction (13) est un timon de direction.

9. Procédé selon l'une des revendications 1 à 7,
**caractérisé en ce que** le chariot de manutention est un chariot élévateur à mât rétractable ou à contrepoids et **en ce que** le dispositif de commande de direction (13) est un volant de direction.

10. Procédé selon l'une des revendications 1 à 9,
**caractérisé en ce que** le générateur de signal de déplacement (2) est un commutateur de démarrage (3) ou une pédale d'accélérateur.
